# EUROPEAN PATENT APPLICATION

(11) **EP 4 624 414 A1**
(43) Date of publication of application: **01.10.2025**
(21) Application number: 23773860.4
(22) Date of filing: 21.03.2023
(51) Int. Cl.: C01B 25/45, C01G 53/00, H01M 4/505, H01M 4/525, H01M 4/58, H01M 4/62, H01M 10/0525

(54) **COMPOSITE POSITIVE ELECTRODE MATERIAL, PREPARATION METHOD THEREFOR, AND APPLICATION THEREOF**

(30) Priority: 14.12.2022 CN 202211610254
(71) Applicant: Eve Power Co., Ltd., Jingmen, Hubei 448000 (CN)
(72) Inventor: WEN, Shengyao, Jingmen, Hubei 448000 (CN); ZHANG, Lin, Jingmen, Hubei 448000 (CN); LIU, Fanfen, Jingmen, Hubei 448000 (CN); WU, Tingting, Jingmen, Hubei 448000 (CN)
(74) Representative: Berggren Oy
(86) International application number: PCT/CN2023/082812
(87) International publication number: WO 2023/179613

(57) **Abstract**

The present disclosure provides a composite positive electrode material, a preparation method therefor, and an application thereof. The method includes the following steps: (1) mixing a first lithium source, a manganese source, an iron source, and a phosphorus source with a solvent to obtain a lithium manganese iron phosphate precursor, performing thermal treatment on the lithium manganese iron phosphate to obtain lithium manganese iron phosphate powder, mixing a nickel cobalt manganese hydroxide with a second lithium source, and performing sintering treatment to obtain a nickel-cobalt-lithium manganese oxide positive electrode material; (2) mixing the lithium manganese iron phosphate powder and lithium nickel cobalt manganese oxide positive electrode material obtained in step (1) with a metal-organic framework (MOF) material, and stirring to obtain mixed powder; and (3) performing calcination treatment on the mixed powder obtained in step (2) to obtain the composite positive electrode material.

## Description

The present disclosure claims the benefit of priority of Chinese Patent Application 202211610254.6, filed with China National Intellectual Property Administration on December 14, 2022, the contents of which is incorporated herein by reference in its entirety.

### TECHNICAL FIELD

The present disclosure belongs to the field of batteries, and relates to a composite positive electrode material and a preparation method and application thereof.

### BACKGROUND

In recent years, "carbon neutralization" has received significant attention from countries around the world. The vigorous development of new energy vehicles has promoted the rapid growth of demands for lithium-ion power batteries. At present, positive electrode materials of lithium-ion power batteries mainly include lithium iron phosphate (LFP) and nickel cobalt manganese ternary materials (NCM). Due to the advantages of high cost performance, high safety, small resource bottleneck, and the like, the LFP has gradually become a first choice for energy storage and power battery enterprises. However, the LFP has the problem of low energy density, while the ternary materials have been criticized for safety due to high energy density.

Lithium manganese iron phosphate (LMFP) is a positive electrode material obtained by adding manganese to LFP. By doping manganese, the LMFP can have a higher voltage platform (4.1 V vs 3.4 V), and the energy density of batteries can be increased by about 15%. Therefore, the LMFP is a positive electrode material with great application prospects. Currently, the LMFP positive electrode material is still in the early stage of industrialization mainly due to the fact that the LMFP has dual-platforms and poor cycle performance, which seriously affects the commercial implementation. Therefore, eliminating dual discharge platforms and improving the electrical cycle stability of the LMFP material is the key to the current technology.

CN111129463A discloses a method of preparing a metal-organic framework (MOF)-coated mono-crystal ternary positive electrode material and a precursor thereof. According to this method, a core uses a high-nickel and low-manganese precursor synthesized by a coprecipitation method, and a shell uses a manganese metal-organic framework (Mn-MOF) synthesized by coordination using Mn and an organic matter carboxylate, and the uniformity of Mn of the shall is ensured at the atomic level.

CN114620708A discloses a method of preparing a positive electrode material of a lithium-ion battery coated with a modified Al-based MOF derivative. Firstly, an Al-based MOF material is immersed in a solution containing Z element to obtain a modified Al-based MOF material, and then, the modified Al-based MOF material is coated with a positive electrode material of a lithium-ion battery by a dry process, thereby finally obtaining a modified positive electrode material of a lithium-ion battery coated with multiple elements (Al, Z).

The positive electrode material mentioned in the foregoing solutions has the problems of harsh production conditions, high cost, and poor cycle performance, and safety performance of high nickel ternary materials, thereby hindering the large-scale application of the positive electrode material in the field of batteries.

### SUMMARY

The following is an overview of the subject matter detailed herein. This overview is not intended to limit the protection scope of the claims.

The present disclosure aims to provide a composite positive electrode material and a preparation method and application thereof. A battery prepared by using a metal-organic framework (MOF) coated with lithium manganese iron phosphate (LMFP) and a nickel cobalt manganese (NCM) composite positive electrode material as a positive electrode material of a lithium-ion battery in the present disclosure exhibits excellent high rate performance, high temperature storage performance, and high temperature cycle performance.

In order to achieve the purpose of the present disclosure, the present disclosure adopts the following technical solutions:

According to a first aspect, some embodiments of the present disclosure provide a method for preparing a composite positive electrode material. The preparation method includes the following steps:
(1) mixing a first lithium source, a manganese source, an iron source, and a phosphorus source with a solvent to obtain a lithium manganese iron phosphate precursor, performing thermal treatment on the lithium manganese iron phosphate to obtain a lithium manganese iron phosphate powder, mixing a nickel cobalt manganese hydroxide with a second lithium source, and performing sintering treatment to obtain a nickel-cobalt-lithium manganese oxide positive electrode material;
(2) mixing the lithium manganese iron phosphate powder and the nickel-cobalt-lithium manganese oxide positive electrode material obtained in step (1) with a MOF material, and stirring to obtain a mixed powder; and
(3) performing calcination treatment on the mixed powder obtained in the step (2) to obtain the composite positive electrode material.

The composite positive electrode material according to embodiments of the present disclosure is prepared by compounding and coating an MOF material with lithium manganese iron phosphate powder and a ternary nickel-cobalt-manganese positive electrode material. After the lithium manganese iron phosphate is mixed with the ternary positive electrode material, when the lithium manganese iron phosphate material is dominant, the dual-platform problem can be improved; while when the ternary positive electrode material is dominant, both safety and cost can be taken into account. In a case that the surface is coated with the MOF, the organic components in the MOF form a carbon matrix after the MOF is carbonized in an inert atmosphere, which is uniformly coated on the surface of the composite positive electrode material to play a bridging role, so that an electron transfer channel is formed to improve the electrical conductivity of the LMFP electrode material. On the other hand, MOF, as a protective coating, covers the surface of the positive electrode material, which reduces side reactions between an active substance and an electrolyte solution, and enhances the structural stability of the material, thereby improving the cycle performance of the electrode material.

The MOF material coating layer prepared by the method according to embodiments of the present disclosure has excellent uniformity, consistency, and electrical conductivity. The method is simple and controllable in preparation process, and is easy to realize large-scale industrial production.

In some embodiments, the first lithium source in the step (1) includes lithium carbonate and/or lithium dihydrogen phosphate.

In some embodiments, the manganese source includes any one of or a combination of at least two of manganese sulfate, manganese carbonate, manganese nitrate, manganese acetate, and manganese oxalate.

In some embodiments, the iron source includes iron phosphate and/or iron powder.

In some embodiments, the phosphorus source includes phosphoric acid and/or ammonium dihydrogen phosphate.

In some embodiments, the solvent includes water.

In some embodiments, the thermal treatment is performed at a temperature ranging from 600°C to 950°C, such as 600°C, 700°C, 800°C, 900°C, or 950°C.

In some embodiments, the thermal treatment is performed for a time period ranging from 5 h to 24 h, such as 5 h, 10 h, 15 h, 20 h, or 24 h.

In some embodiments, the second lithium source in the step (1) includes lithium hydroxide and/or lithium carbonate.

In some embodiments, the sintering treatment is performed at a temperature ranging from 450°C to 1000°C, such as 450°C, 500°C, 600°C, 700°C, 800°C, or 1000°C.

In some embodiments, the sintering treatment is performed for a time period ranging from 5 h to 12 h, such as 5 h, 8 h, 10 h, 11 h, or 12 h.

In some embodiments, a chemical formula of the lithium manganese iron phosphate in the step (2) is LiMnₓFe₁₋ₓPO₄, wherein 0<x<1.

In some embodiments, a chemical formula of the nickel-cobalt-lithium manganese oxide is LiNiₐCo_{b}Mn_{(1-a-b)}O₂, wherein a ranges from 0.5 to 0.8, and b ranges from 0.1 to 0.2.

In some embodiments, a mass ratio of the lithium manganese iron phosphate powder to the nickel-cobalt-manganese cathode material in the step (2) is 1:(0.1 to 10), such as 1:0.1, 1:0.2, 1:0.5, 1:1, 1:5, or 1:10.

In some embodiments, the MOF material includes any one of or a combination of at least two of IRMOFs, MILs, MOF-5, MOF-74 or ZIF-8.

The MOF material is a porous material with a periodic network formed by selfassembly of coordination bonds using metal ions as nodes and organic ligands as connecting bridges. Due to the advantages of high specific surface area, designability of components, diverse topological structures, and the like, the MOF material has great application potential in catalysis, batteries, energy source storage, and other fields. Metal sites of the MOF can be oxidized into amorphous oxides, and they are highly ordered at the nano-level, so that the coating layer can be maintained at the nano-level.

In some embodiments, the stirring in the step (2) is performed at a speed ranging from 300 rpm to 800 rpm, such as 300 rpm, 400 rpm, 500 rpm, 600 rpm, or 800 rpm.

In some embodiments, the stirring is performed for a time period ranging from 0.5 h to 5 h, such as 0.5 h, 1 h, 2 h, 3 h, 4 h, or 5 h.

In some embodiments, the calcination treatment in the step (3) is performed at a temperature ranging from 200°C to 600°C, such as 200°C, 300°C, 400°C, 500°C, or 600°C.

In some embodiments, the calcination treatment is performed for a time period ranging from 2 h to 12 h, such as 2 h, 5 h, 8 h, 10 h, or 12 h.

According to a second aspect, some embodiments of the present disclosure provide a composite positive electrode material. The composite positive electrode material is prepared by the method according to the first aspect.

The battery prepared by using an MOF coated with LMFP and a NCM composite positive electrode material as a positive electrode material of a lithium-ion battery in embodiments of the present disclosure exhibits excellent high rate performance, high temperature storage performance, and high temperature cycle performance.

In some embodiments, the composite positive electrode material includes a core and a coating layer disposed on a surface of the core.

In some embodiments, the core includes a nickel-cobalt-manganese ternary positive electrode material and a lithium manganese iron phosphate positive electrode material.

In some embodiments, the coating layer includes an MOF material.

In some embodiments, based on a mass of the composite positive electrode material being 100%, a mass fraction of the coating layer ranges from 0.1% to 1.0%, such as 0.1%, 0.2%, 0.3%, 0.5%, or 1.0%.

According to a third aspect, some embodiments of the present disclosure provide a positive electrode sheet. The positive electrode sheet includes the composite positive electrode material according to the second aspect.

According to a fourth aspect, some embodiments of the present disclosure provide a lithium-ion battery. The lithium-ion battery includes the positive electrode sheet according to the third aspect.

Compared to related arts, The present disclosure has the following beneficial effects:
(1) In The present disclosure, the lithium manganese iron phosphate powder is compounded with the ternary nickel-cobalt-manganese positive electrode material, and the surface is coated with the MOF coating layer, so that, and the rate performance and cycle performance of the material can be improved while taking into account the safety, cost and energy density of the material.
(2) The present disclosure provides a method of preparing a composite positive electrode material by coating LMFP and an NCM material with MOF. After the ferromanganese is mixed with the ternary materials, when the ferromanganese material is dominant, the dual-platform problem can be improved; while when the ternary material is dominant, both safety and cost can be taken into account. In a case that the surface is coated with the MOF, the organic components in the MOF form a carbon matrix after the MOF is carbonized in an inert atmosphere, is which uniformly coated on the surface of the composite positive electrode material to play a bridging role, so that an electron transfer channel is formed to improve the electrical conductivity of the LMFP electrode material. On the other hand, MOF, as a protective coating, covers the surface of the positive electrode material, which reduces side reactions between an active substance and an electrolyte solution, and enhances the structural stability of the material, thereby improving the cycle performance of the electrode material. The battery prepared by using a MOF coated with LMFP and an NCM composite positive electrode material as a positive electrode material of a lithium-ion battery exhibits excellent high rate performance, high temperature storage performance, and high temperature cycle performance.

Other aspects can be understood after reading and understanding the detailed descriptions below.

### DETAILED DESCRIPTION

### Example 1

This example provides a composite positive electrode material. The method for preparing the composite positive electrode material is as follows:
(1) Lithium carbonate, manganese sulfate, iron powder, and phosphoric acid were weighed according to a molar ratio of Li:Mn:Fe:P=1.1:0.6:0.4:1, and added to deionized water for dispersing, stirring and ball milling to obtain a precursor. The precursor was placed into a box-type furnace, and the box-type furnace is heated to a temperature of 750°C at a heating rate of 5°C/min under nitrogen protection. The temperature was kept for 12 h, and then cooled to a room temperature under a nitrogen atmosphere to obtain lithium manganese iron phosphate (LiMn_{0.6}Fe_{0.4}PO₄) powders. Ni_{0.5}Co_{0.2}Mn_{0.3}(OH)₂ and lithium hydroxide were mixed and stirred, and then calcinated at 800°C for 8 h to obtain NCM523 positive electrode materials.
(2) The lithium manganese iron phosphate powders and ternary nickel cobalt manganese positive electrode materials obtained in the step (1) were mixed at a mass ratio of 7:3, and then mixed with IRMOFs materials, and stirred at 500 rpm for 2 h to obtain mixed powders.
(3) The mixed powders obtained in step (2) were calcined at 400°C for 6 h and then cooled to a room temperature under the nitrogen atmosphere to obtain the composite positive electrode materials.

In the composite positive electrode materials, the mass ratio of an MOF coating layer was 0.3%.

### Example 2

This example provides a composite positive electrode material. The method for preparing the composite positive electrode material is as follows:
(1) Lithium carbonate, manganese sulfate, iron powder, and phosphoric acid were weighed according to a molar ratio of Li:Mn:Fe:P=1.1:0.6:0.4:1, and added to deionized water for dispersing, stirring and ball milling to obtain a precursor. The precursor was placed into a box-type furnace, and the box-type furnace is heated to a temperature of 800°C at a heating rate of 5°C/min under nitrogen protection. The temperature was kept for 11 h, and then cooled to a room temperature under a nitrogen atmosphere to obtain lithium manganese iron phosphate powders. Ni_{0.8}Co_{0.1}Mn_{0.1}(OH)₂ and lithium hydroxide were mixed and stirred, and then calcinated at 750°C for 8 h to obtain NCM811 positive electrode materials.
(2) The lithium manganese iron phosphate powders and ternary nickel cobalt manganese positive electrode materials obtained in the step (1) were mixed at a mass ratio of 3:7, and then mixed with MOF-5 materials, and stirred at 600 rpm for 2 h to obtain mixed powders.
(3) The mixed powders obtained in the step (2) were calcined at 500°C for 5 h and then cooled to a room temperature under the nitrogen atmosphere to obtain the composite positive electrode materials.

In the composite positive electrode material, the mass ratio of an MOF coating layer was 0.5%.

### Example 3

The difference between this example and Example 1 was that the mass ratio of an MOF coating layer was 0.1% in the composite materials. Other conditions and parameters were exactly the same as those in Example 1.

### Example 4

The difference between this example and Example 1 was that the mass ratio of an MOF coating layer was 1.0% in the composite material. Other conditions and parameters were exactly the same as those in Example 1.

### Comparative Example 1

The difference between this Comparative Example and Example 1 was only that the lithium manganese iron phosphate positive electrode materials were not added. Other conditions and parameters were exactly the same as those in Example 1.

### Comparative Example 2

The difference between this comparative example and Example 1 was only that the ternary nickel-cobalt-manganese positive electrode materials were not added. Other conditions and parameters were exactly the same as those in Example 1.

### Comparative Example 3

The difference between this comparative example and Example 1 was only that the MOF materials were not added. Other conditions and parameters were exactly the same as those in Example 1.

### Performance test:

The materials obtained in Examples 1 to 4 and Comparative Examples 1 to 3 were used as positive electrode materials, graphite was used as a negative electrode material, and a PE/PP high polymer material was used as a separator, which were assembled into a jelly roll in a manner of winding or lamination, the jelly roll was encapsulated in an aluminum housing or an aluminum plastic film, then a 1M LiPF₆/EC+EMC lithium-ion electrolyte solution was injected, so that a soft-packed lithium-ion battery was assembled. Performances of the obtained lithium-ion battery were tested, and test results were shown in Table 1.

**Table 1**

| | 45°C-1 C/1 C cycle for 1500 cycles | | | 60°C-30D storage | -10°C-3 C rate discharge |
|---|---|---|---|---|---|
| | Capacity retention rate | DCR growth rate | Voltage drop/V | | |
| Example 1 | 90.3% | 35% | 0.10 | 94.3% | 85.1% |
| Example 2 | 88.7% | 53% | 0.18 | 95.1% | 86.5% |
| Example 3 | 89.8% | 46% | 0.19 | 92.1% | 80.2% |
| Example 4 | 91.3% | 40% | 0.09 | 94.6% | 83.6% |
| Comparative Example 1 | 86.1% | 150% | 0.13 | 93.3% | 84.3% |
| Comparative Example 2 | 85.6% | 42% | 0.33 | 91.3% | 83.0% |
| Comparative Example 3 | 82.3% | 300% | 0.36 | 86.9% | 75.1% |

From Table 1, it can be seen from Examples 1 to 2 that different proportions of LMFP and NCM result in different emphases on performances of the materials. If the proportion of the LMFP was high, it was beneficial for cycle, DCR, and voltage drop. If the proportion of the NCM was high, it was beneficial for storage and rate performance.

From the comparison between Example 1 and Examples 3 to 4, it can be concluded that the mass ratio of the MOF coating layer in the composite positive electrode materials of the present disclosure will affect the performances. If the mass ratio of the MOF coating layer was controlled to be from 0.1% to 1.0%, the prepared composite positive electrode materials had better performances. If the mass proportion of the MOF coating layer was too low, the coating effect was not obvious, and a good effect cannot be achieved. If the mass proportion of the MOF coating layer was too high, the proportion of active substances was reduced, resulting in a decrease in gram capacity.

From the comparison between Example 1 and Comparative Examples 1 to 2, it can be concluded that the core of the composite positive electrode materials in The present disclosure were composed of the lithium manganese iron phosphate powders and the ternary nickel-cobalt-manganese positive electrode materials; when the ferromanganese materials were dominant, the dual-platform problem can be improved; and when the ternary materials were dominant, both the safety and cost can be taken into account.

From the comparison between Example 1 and Comparative Example 3, it can be concluded that after the MOF was carbonized in an inert atmosphere, organic components in the MOF form a carbon matrix, which was uniformly coated on the surface of the composite positive electrode material to play a bridging role, and an electron transfer channel was formed to improve the electrical conductivity of the LMFP electrode materials. On the other hand, MOF, as a protective coating, covers the surface of the positive electrode materials, which reduces side reactions between active substances and an electrolyte solution, and enhances the structural stability of the material, thereby improving the cycle performance of the electrode materials.

## Claims

1. A method for preparing a composite positive electrode material, comprising the following steps:
(1) mixing a first lithium source, a manganese source, an iron source, and a phosphorus source with a solvent to obtain a lithium manganese iron phosphate precursor, performing thermal treatment on the lithium manganese iron phosphate to obtain a lithium manganese iron phosphate powder, mixing a nickel cobalt manganese hydroxide with a second lithium source, and performing sintering treatment to obtain a nickel-cobalt-lithium manganese oxide positive electrode material;
(2) mixing the lithium manganese iron phosphate (LiMnₓFe₁₋ₓPO₄) powder and the nickel-cobalt-lithium manganese oxide (LiNiₐCo_{b}Mn_{(1-a-b)}O₂) positive electrode material obtained in the step (1) with a metal-organic framework (MOF) material, and stirring to obtain mixed powder; and
(3) performing calcination treatment on the mixed powder obtained in the step (2) to obtain the composite positive electrode material.

2. The method according to claim 1, wherein the first lithium source in the step (1) comprises lithium carbonate and/or lithium dihydrogen phosphate;
optionally, the manganese source comprises any one of or a combination of at least two of manganese sulfate, manganese carbonate, manganese nitrate, manganese acetate, and manganese oxalate;
optionally, the iron source comprises iron phosphate and/or iron powder;
optionally, the phosphorus source comprises phosphoric acid and/or ammonium dihydrogen phosphate;
optionally, the solvent comprises water;
optionally, the thermal treatment is performed at a temperature ranging from 600°C to 950°C; and
optionally, the thermal treatment is performed for a time period ranging from 5 h to 24 h.

3. The method according to claim 1 or 2, wherein the second lithium source in the step (1) comprises lithium hydroxide and/or lithium carbonate;
optionally, the sintering treatment is performed at a temperature ranging from 450°C to 1000°C; and
optionally, the sintering treatment is performed for a time period ranging from 5 h to 12 h.

4. The method according to any one of claims 1 to 3, wherein a chemical formula of the lithium manganese iron phosphate in step (2) is LiMnₓFe₁₋ₓPO₄, wherein 0<x<1;
optionally, a chemical formula of the lithium nickel cobalt manganese oxide is LiNiₐCo_{b}Mn_{(1-a-b)}O₂, wherein a=0.5 to 0.8, and b=0.1 to 0.2;
a mass ratio of the lithium manganese iron phosphate powder to the nickel-cobalt-lithium manganese oxide positive electrode material is 1:(0.1-10); and
optionally, the MOF material comprises any one of or a combination of at least two of IRMOFs, MILs, MOF-5, MOF-74 or ZIF-8.

5. The preparation method according to any one of claims 1 to 4, wherein the stirring in the step (2) is performed at a speed ranging from 300 rpm to 800 rpm; and
optionally, the stirring is performed for a time period ranging from 0.5 h to 5 h.

6. The method according to any one of claims 1 to 5, wherein the calcination treatment in the step (3) is performed at a temperature ranging from 200°C to 600°C; and
optionally, the calcination treatment is performed for a time period ranging from 2 h to 12 h.

7. A composite positive electrode material, prepared by the method according to any one of claims 1 to 6.

8. The composite positive electrode material according to claim 7, wherein the composite positive electrode material comprises a core and a coating layer disposed on a surface of the inner core;
optionally, the core comprises a nickel cobalt manganese ternary positive electrode material and a lithium manganese iron phosphate positive electrode material;
optionally, the coating layer comprises an MOF material; and
optionally, based on a mass of the composite positive electrode material being 100%, a mass fraction of the coating layer ranges from 0.1% to 1.0%.

9. A positive electrode sheet, comprising the composite positive electrode material according to claim 7 or 8.
